# EUROPÄISCHE PATENTSCHRIFT

(11) **EP 0 824 057 B1**
(45) Veröffentlichungstag und Bekanntmachung des Hinweises auf die Patenterteilung: **28.02.2001**
(21) Anmeldenummer: 97113384.8
(22) Anmeldetag: 04.08.1997
(51) Int. Cl.: B29C 45/02, B29C 45/54

(54) **Verfahren und Vorrichtung zur Herstellung von Spritzgussteilen aus Kunststoff**
Method and apparatus for manufacturing plastic injection moulded articles
Procédé et dispositif pour fabriquer des articles moulés par injection en matière plastique

(30) Priorität: 10.08.1996 DE 19632315
(43) Veröffentlichungstag der Anmeldung: 18.02.1998
(73) Patentinhaber: Günther Heisskanaltechnik GmbH, 35066 Frankenberg/Eder (DE)
(72) Erfinder: Görlich, Rudolf, 74177 Bad Friedrichshall (DE)
(74) Vertreter: Olbricht, Karl Heinrich, Dipl.-Phys.

(56) Entgegenhaltungen:
- EP-A- 0 393 389
- FR-A- 2 330 522
- "Moules à injection directe" PLASTIQUES MODERNES ET ELASTOMERES., Bd. 35, Nr. 1, 1983, PARIS FR, Seite 41 XP002018543
- PATENT ABSTRACTS OF JAPAN vol. 8, no. 2 (M-266) [1439] , 7.Januar 1984 & JP 58 167146 A (ARAI SEISAKUSHO K.K.), 3.Oktober 1983,
- PATENT ABSTRACTS OF JAPAN vol. 14, no. 447 (M-1029), 25.September 1990 & JP 02 178010 A (NIIGATA ENG CO LTD), 11.Juli 1990,

## Beschreibung

Die Erfindung betrifft eine Vorrichtung und ein Verfahren zum gleichzeitigen Herstellen einer Vielzahl von Kleinstspritzgußteilen gemäß den Oberbegriffen von Anspruch 1 und Anspruch 9.

Für die Fertigung kleiner Spritzgußteile aus Polymerwerkstoffen ist es üblich, in einem Spritzgießwerkzeug mehrere gleichartige Formkavitäten vorzusehen, die über einen stem- oder kammförmigen Angußverteiler gefüllt werden. Der darin zusammen mit den erzeugten Formteilen erstarrende Werkstoff kann nur teilweise und erst nach Regranulierung wiederverwertet werden. Femer erwies sich herkömmlich aus geometrischen Gründen ein exakter Fließstrecken-Abgleich im Angußkanal z.B. für das Umspritzen von Leadframes oder von vormontierten Mikrobauelementen als undurchführbar.

In FR-A-2 330 522 ist eine Werkzeug-Gestaltung zum Herstellen von etwas größeren Kunststoff-Hohlkörpern - nämlich Jagdpatronenhülsen - ausführlich beschrieben, wonach eine radial breit ausladende, kühlbare Spritzplatten-Gruppe mit parallelen Düsenkanälen und darin koaxial kolbengeführten Verschlußnadeln sowie Querverbindungen zwischen Vorkammern und Kanälen einer zentralen Materialzufuhr enthält Die schon von der Aufgabenstellung her voluminöse Anordnung erfordert erheblichen Bau- und Montageaufwand wegen der Steuerung, exakten Bewegung und Abdichtung von vier zusammenwirkenden Platten, von denen eine auch noch zweiteilig ist. Mittels doppeltwirkender Hydraulikzylinder werden die Verschlußnadeln bewegt. Deren Vorderende muß an einem Düsen-Mundstück einen Kanal, der so lang ist wie eine Material-Vorkammer, nicht nur ausfüllen, sondern überragen, um zur Formgebung an einen in zwei Werkzeugplatten gehalterten Dom (Kern) heranzukommen. Der Düsenkanal faßt eine nicht geringe Menge von Restmaterial, das am Anguß verpreßt und zum Schluß von der Nadelspitze durchstoßen wird. Dabei erfährt die Spritzmasse beachtliche Temperaturänderungen, die Qualitätseinbußen nach sich ziehen können. Ferner verstreicht bis zum Erstarren und Auswerfen des gespritzten Artikels verhältnismäßig viel Zeit, wodurch der Maschinentakt und mithin die Produktionsleistung verlangsamt wird.

Analog ist aus US-A-5 069 840 eine Vorrichtung bekannt, die nur für größere Formteile mit mehreren Angüssen geeignet ist. Nach DE-A1-4 133 435 muß in einem beheizten Zwischenspeicher mit Druckzylinder so viel geschmolzenes Material gesammelt werden, bis es zu einer Füllung großer Formkavitäten reicht.
Ein wichtiges Ziel der Erfindung besteht hingegen darin, sehr viele, sehr kleine Teile zweckmäßig in einem Arbeitsgang auf üblichen Spritzgießmaschinen rationell fertigen zu können, nämlich mit einer großen Anzahl von Formkavitäten pro Werkzeug. Dabei sollen unterschiedliche Fließwege und Material-Inhomogeneitäten die Formfüllung sowie das Material am Angußpunkt nicht beeinflussen.

Hauptmerkmale der Erfindung sind in den Ansprüchen 1 und 9 angegeben. Ausgestaltungen sind Gegenstand der Ansprüche 2 bis 8 und 10 bis 12.

Bei einer Vorrichtung zum gleichzeitigen Herstellen einer Vielzahl von Kleinstspritzgußteilen aus thermoplastischen oder vernetzenden Polymeren in einem Spritzgußwerkzeug mit einem Angußblock, der einen Formblock mit einer Vielzahl von Formkavitäten aufweist, denen jeweils ein einziger Ausgangskanal einer Einspritzdüs zugeordnet ist, wobei das Material in einem ersten Schritt von einer Förderschnecke über temperierbare Angußkanäle volumendosiert in eine Vielzahl von Vorkammern und in einem zweiten Schritt mittels Einspritzzylindem und -kolben in die Formkavitäten einbringbar ist, wobei der durch den jeweiligen Einspritzkolben erzeugte Spritzdruck jeder Einspritzdüse unabhängig vom Förderdruck der Förderschnecke ist, wobei die die Vorkammern bildenden Einspritz-Elemente, nämlich Zylinder, Kolben und Düsen jeweils auf einer Achse angeordnet sind und wobei jeweils in einer Längsbohrung jedes Einspritzkolbens axial verschiebbare Verschlußorgane zum Verschließen der zugeordneten Einspritzdüsen geführt sind, ist gemäß dem kennzeichnenden Teil von Anspruch 1 vorgesehen, daß die Einspritzzylinder jeweils in eine konische Düsenspitze auslaufen, die durch eine konische Spitze des zugeordneten Verschlußorgans verschließbar ist.

Gemäß Anspruch 2 können die Einspritzdüsen jeweils mehrere Ausgangskanäle aufweisen, die in je eine Formkavität münden, und nach Anspruch 3 sind mehrere Ausgangskanäle einer Einspritzdüse durch nur ein Verschlußorgan absperrbar. Beide Maßnahmen tragen zu hoher Produktivität bei.

Wenn die Einspritzkolben laut Anspruch 4 beim Spritzvorgang mit ihren ebenen Stirnflächen bis an im wesentlichen ebene Enden der Zylinder heranlaufen, sind nur ganz geringe Restmengen von Spritzmasse in den kurzen konischen Düsenspitzen von den Nadelende noch zu verdrängen; das geschieht sehr schnell und ohne nennenswerten Wärmeverlust.

Fertigungstechnisch günstig sind die Merkmale der Ansprüche 5 bis 8, wie im einzelnen aus der speziellen Beschreibung hervorgeht. Die vorgeschlagene Konstruktion zeichnet sich durch Einfachheit und hohe mechanische Stabilität bei guter Steuerbarkeit aus. Die Einspritzzylinder können sehr schlank gebaut werden, wodurch sich in der Anreihung eine hohe Dichte pro Flächeneinheit und damit eine hohe Zahl von Formkavitäten pro Werkzeug erzielen läßt.

Bei einem Verfahren zum gleichzeitigen Herstellen einer Vielzahl von Kleinstspritzgußteilen aus thermoplastischen oder vernetzenden Polymeren in einem Spritzgußwerkzeug mit einem Angußblock, der einen Formblock mit einer Vielzahl von Formkavitäten aufweist, denen jeweils ein einziger Ausgangskanal einer Einspritzdüse zugeordnet ist, wobei das Material in einem ersten Schritt von einer Förderschnecke über temperierbare Angußkanäle volumendosiert in eine Vielzahl von Vorkammern und in einem zweiten Schritt mittels Einspritzzylindern und -kolben in die Formkavitäten eingebracht wird, wobei der durch den jeweiligen Einspritzkolben erzeugte Spritzdruck jeder Einspritzdüse unabhängig vom Förderdruck der Förderschnecke ist und die Zuführung des Materials in die betreffende Formkavität nach Öffnen der zugeordneten, in Ruhestellung geschlossenen Einspritzdüse erfolgt, zeichnet sich die Erfindung laut Anspruch 9 dadurch aus, daß man in den Einspritzzylindern konische Düsenspitzen vorsieht, die jeweilsdurch eine konische Spitze eines zugeordneten Verschlußorgans verschließbar sind.

Gemäß Anspruch 10 können die in den Einspritzkolben verschieblich angeordneten Verschlußorgane der Einspritzdüsen einerseits sowie die Einspritzkolben andererseits jeweils gemeinsam bewegt werden, wozu Anspruch 11 definiert, daß die Zuführung des Materials in die betreffende Formkavität erfolgt, nachdem die Verschlußorgane der zugeordneten, in Ruhestellung geschlossenen Einspritzdüse durch Bewegung eines zweiten Hubbalkens in Freigabestellung gelangt sind, worauf über einen ersten Hubbalken die Einspritzkolben gemeinsam betätigt werden.

Die Verfahrensgestaltung von Anspruch 12 sieht vor, daß man die Einspritzzylinder schlank ausbildet und mit hoher Dichte pro Flächeneinheit aneinanderreiht, wobei die Länge des Angußkanals zu jeder Vorkammer ohne Einfluß auf die Füllung der zugeordneten Formkavität frei wählbar ist.

Einzelheiten werden im folgenden anhand der Zeichnung näher erläutert. Es zeigen:
- Fig. 1: eine Schnittansicht einer nicht erfindungsgemäßen Einspritzvorrichtung zur Veranschaulichung des mechanischen Aufbauprinzips,
- Fig. 2: eine schematisierte Schnittansicht einer erfindungsgemäßen Einspritzvorrichtung und
- Fig. 3: eine Schnittansicht einer nicht erfindungsgemäßen Einspritzvorrichtung mit einer Mehrfachdüse zur Verdeutlichung ihres Verteilungsprinzips.

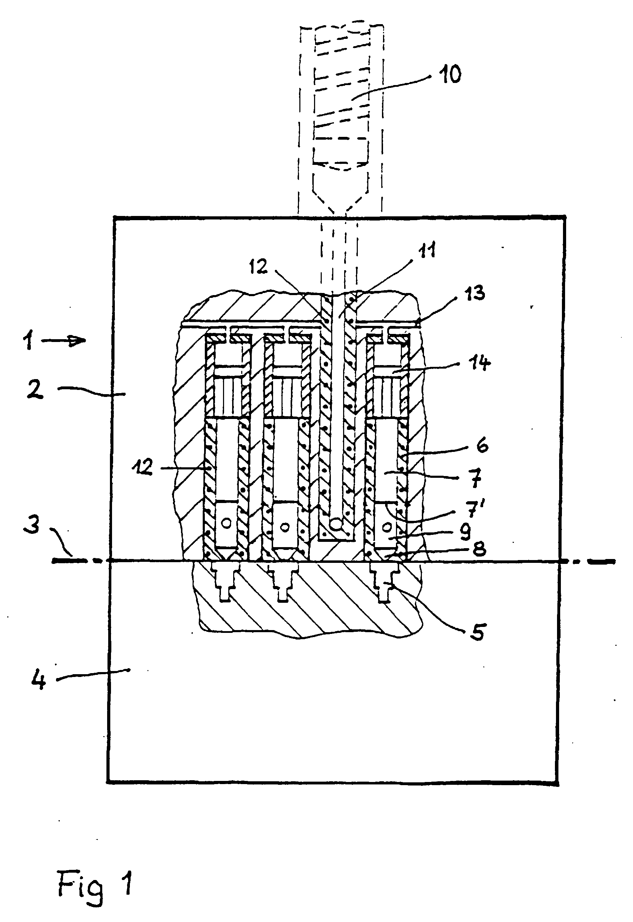

Fig. 1 zeigt eine Einspritzvorrichtung 1 mit einem Angußblock 2, der beim Spritzvorgang an der Trennebene 3 gegen einen Formblock 4 gepreßt wird. In diesem Formblock 4 befinden sich die Formkavitäten 5 zur Aufnahme der Kunststoffschmelze. Im Angußblock 2 sind Einspritzzylinder 6 angeordnet, die sich bis zur Trennebene 3 erstrecken und in denen Einspritzkolben 7 verschiebbar gelagert sind. An der der Trennebene 3 zugewandten Stirnfläche jedes Einspritzzylinders 6 befindet sich eine Einspritzdüse 8 mit verringertem Querschnitt. Der Einspritzkolben 7 nimmt nun in Ruhestellung im Einspritzzylinder 6 eine solche Stellung ein, daß zwischen der Einspritzdüse 8 und der dieser zugewandten Stirnfläche 7' des Einspritzkolbens 7 eine Vorkammer 9 gebildet wird, die zur Aufnahme der Kunststoffschmelze dient. Diese wird von der schematisch dargestellten Förderschnecke 10 über temperierbare Angußkanäle 11 der Vorkammer 9 zugeführt.

Zum Temperieren der Einspritzzylinder 6 und der Angußkanäle 11 dienen Temperierelemente 12 in Form von Heiz- bzw. Kühlelementen.

Zur Betätigung von Einspritzkolben 7 sind Zuführleitungen 13 vorgesehen, in denen das Druckmedium dem Einspritzzylinder 6 zuführbar ist. Dieses wirkt auf einen mit dem Einspritzkolben 7 verbundenen Betätigungskolben 14.

Beim Einspritzvorgang befindet sich der Einspritzkolben 7 zunächst in der in Fig. 1 gezeichneten Ruhestellung. In der Vorkammer 9 befindet sich die von der Förderschnecke 10 zugeführte Kunststoffschmelze. Nach Beaufschlagung von Betätigungskolben 14 durch das Druckmedium verschiebt sich der Einspritzkolben 7 in Richtung zur Einspritzdüse 8 und befördert die in der Vorkammer 9 befindliche Kunststoffschmelze in die Formkavität 5.

Nach Beendigung des Einspritzvorgangs wird der Einspritzkolben 7 unter Wirkung der zuströmenden Kunststoffschmelze wieder in seine Ruhestellung zurückgeführt, wobei sich die Vorkammer 9 wieder mit der Kunststoffschmelze füllt. Die Einspritzvorrichtung 1 ist damit wieder bereit für einen neuen Zyklus, die Kunststoffschmelze in der Vorkammer 9 ist in einem verarbeitbaren temperierten Zustand und die Formteile in den Formkavitäten 5 nehmen durch das entsprechende Temperieren ihren gewünschten Zustand an.

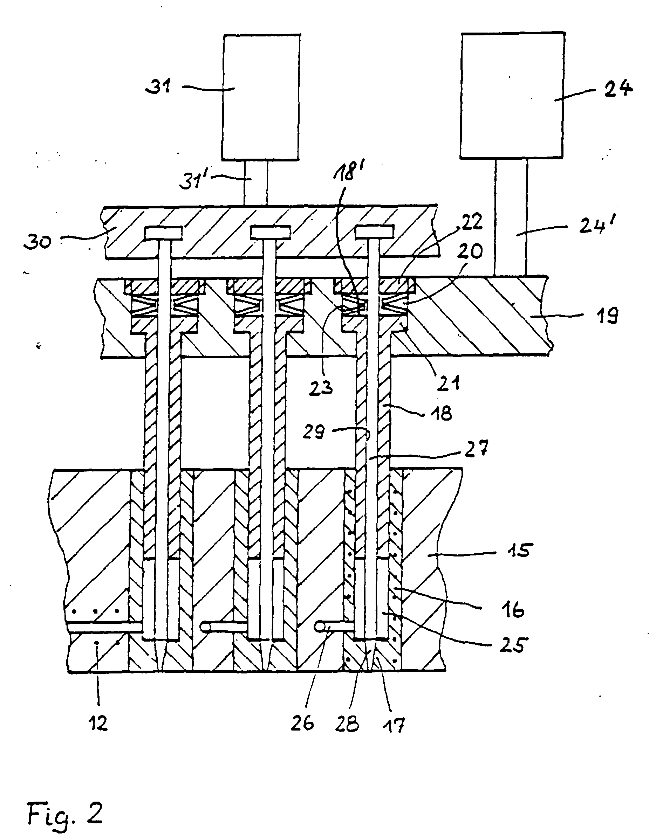

Fig. 2 zeigt ein Ausführungsbeispiel der Erfindung, bei dem im Angußblock 15 wieder Einspritzzylinder 16 angeordnet sind. Sie sind wieder je mit einer Einspritzdüse 17 versehen und in ihrem Inneren ist je ein Einspritzkolben 18 verschiebbar gelagert. Getrennt vom Angußblock 15 erstreckt sich ein verschiebbarer Hubbalken 19, der Sacklochbohrungen 20 aufweist, in denen Flansche 21 der Einspritzkolben 18 verschiebbar gelagert sind. Die Sacklochbohrungen 20 lassen sich durch Ringschrauben 22 verschließen und zwischen Schrauben 22 und Flansch 21 ist ein Paket von Ausgleichsfedern 23 angeordnet. Der Hubbalken 19 ist mit der Kolbenstange 24' eines Hubzylinders 24 verbunden. Außerdem ist auch bei diesem Ausführungsbeispiel zwischen Einspritzkolben 18 und Einspritzdüse 17 eine Vorkammer 25 vorgesehen, der durch temperierbare Angußkanäle 26 die Kunststoffschmelze zuführbar ist.

Bei diesem Ausführungsbeispiel ist die Einspritzdüse 17 in Ruhestellung durch ein Verschlußorgan 27 verschlossen, dessen konische Spitze 28 in die ebenfalls konische Einspritzdüse 17 eingreift. Das Verschlußorgan 27 erstreckt sich durch eine Längsbohrung 29 des Einspritzkolbens 18 bis zu einem weiteren Hubbalken 30, der durch die Kolbenstange 31' eines weiteren Hubzylinders 31 betätigbar ist. Die Verschlußorgane 27 sind dabei fest mit dem Hubbalken 30 verbunden.

Die Betätigung bei diesem Ausführungsbeispiel erfolgt im Prinzip in derselben Weise wie bereits beim ersten Ausführungsbeispiel geschildert, jedoch sind in Ruhestellung zunächst die Einspritzdüsen 17 verschlossen. Vor Einleitung des Einspritzvorgangs durch den Einspritzkolben 18 werden jedoch die Verschlußorgane 27 durch den Hubbalken 30 so nach oben gezogen, daß sie die Einspritzdüsen 17 freigeben. Der Einspritzvorgang erfolgt durch Betätigung des Hubbalkens 19, der die Einspritzkolben 18 gemeinsam verschiebt, so daß die Kunststoffschmelze durch die Einspritzdüsen 17 austritt.

Ausgleichsfedern 23 dienen dabei dazu, die einzelnen Einspritzkolben 18 mechanisch voneinander zu entkoppeln, so daß Toleranzen aller Art ausgeglichen werden.

Nach dem Zurückfahren von Einspritzkolben 18 und Eintreten der Spitzen 28 der Verschlußorgane 27 in die Einspritzdüsen 17 tritt wieder Kunststoffschmelze durch die Angußkanäle 26 in die Vorkammer 25 und die Einspritzvorrichtung ist bereit für einen neuen Zyklus.

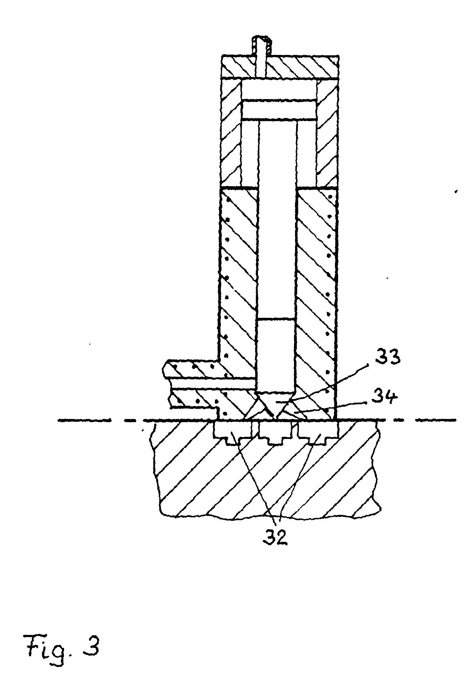

Fig. 3 zeigt ein Ausführungsbeispiel einer Einspritzvorrichtung mit so kleinen Formkavitäten 32, daß sie von einer Einspritzvorrichtung bedient werden können. Dazu hat eine Einspritzdüse 33 mehrfache Ausgangskanäle 34. Jeder Ausgangskanal 34 mündet in eine Formkavität 32.

## Patentansprüche

1. Vorrichtung (1) zum gleichzeitigen Herstellen einer Vielzahl von Kleinstspritzgußteilen aus thermoplastischen oder vernetzenden Polymeren in einem Spritzgußwerkzeug mit einem Angußblock (2; 15), der einen Formblock (4) mit einer Vielzahl von Formkavitäten (5; 32) aufweist, denen jeweils ein einziger Ausgangskanal einer Einspritzdüse (8; 17; 33) zugeordnet ist, wobei das Material in einem ersten Schritt von einer Förderschnecke (10) über temperierbare Angußkanäle (11; 26) volumendosiert in eine Vielzahl von Vorkammern (9; 25) und in einem zweiten Schritt mittels Einspritzzylindern (6; 16) und -kolben (7; 18) in die Formkavitäten (5; 32) einbringbar ist, wobei der durch den jeweiligen Einspritzkolben (7; 18) erzeugte Spritzdruck jeder Einspritzdüse (8; 17; 33) unabhängig vom Förderdruck der Förderschnecke (10) ist, wobei die die Vorkammern (9, 25) bildenden Einspritz-Elemente, nämlich Zylinder (6, 16), Kolben (7, 18) und Düsen (8, 17, 33) jeweils auf einer Achse angeordnet sind und wobei jeweils in einer Längsbohrung (29) jedes Einspritzkolbens (7, 18) axial verschiebbare Verschlußorgane (27) zum Verschließen der zugeordneten Einspritzdüsen (8; 17; 33) geführt sind, dadurch **gekennzeichnet,** daß die Einspritzzylinder (6, 16) jeweils in eine konische Düsenspitze (8, 17) auslaufen, die durch eine konische Spitze (28) des zugeordneten Verschlußorgans (27) verschließbar ist.

2. Vorrichtung nach Anspruch 1, dadurch **gekennzeichnet,** daß die Einspritzdüsen (33) jeweils mehrere Ausgangskanäle (34) aufweisen, die in je eine Formkavität (32) münden.

3. Vorrichtung nach Anspruch 2, dadurch **gekennzeichnet,** daß durch ein Verschlußorgan (27) mehrere Ausgangskanäle (34) einer Einspritzdüse (17) verschließbar sind.

4. Vorrichtung nach einem der Ansprüche 1 bis 3, dadurch **gekennzeichnet,** daß die Einspritzkolben (7, 18) beim Spritzvorgang mit ebenen Stirnflächen bis an im wesentlichen ebene Enden der Einspritzzylinder (6, 16) heranlaufen.

5. Vorrichtung nach einem der Ansprüche 1 bis 4, dadurch **gekennzeichnet,** daß die Einspritzkolben (7; 18) mit einem Betätigungskolben (14; 24') über einen ersten Hubbalken (19) verbunden sind, der bevorzugt Sackloch-Bohrungen (20) aufweist, die durch Schrauben (22) verschließbar und in denen Flansche (21) der Einspritzkolben (7; 18) verschieblich gelagert sind.

6. Vorrichtung nach Anspruch 5, dadurch **gekennzeichnet,** daß an den Vorkammern (9; 25) gegenüberliegenden Stirnflächen (18') der Einspritzkolben (7; 18) Ausgleichsfedern (23) angeordnet sind, namentlich paketweise zwischen Schrauben (22) und Flanschen (21) der Einspritzkolben (7; 18).

7. Vorrichtung nach Anspruch 5 oder 6, dadurch **gekennzeichnet,** daß die Verschlußorgane (27) durch die Längsbohrungen der Einspritzkolben (7; 18) hindurch bis zu einem zweiten Hubbalken (30) reichen und mit diesem fest verbunden sind.

8. Vorrichtung nach einem der Ansprüche 1 bis 7, dadurch **gekennzeichnet,** daß die Einspritzzylinder (6, 16) schlank ausgebildet und mit hoher Dichte pro Flächeneinheit aneinandergereiht sind, wobei die Länge des Angußkanals (11, 26) zu jeder Vorkammer (9; 25) ohne Einfluß auf die Füllung der zugeordneten Formkavität (5; 32) frei wählbar ist.

9. Verfahren zum gleichzeitigen Herstellen einer Vielzahl von Kleinstspritzgußteilen aus thermoplastischen oder vernetzenden Polymeren in einem Spritzgußwerkzeug mit einem Angußblock, der einen Formblock mit einer Vielzahl von Formkavitäten aufweist, denen jeweils ein einziger Ausgangskanal einer Einspritzdüse zugeordnet ist, wobei das Material in einem ersten Schritt von einer Förderschnecke über temperierbare Angußkanäle volumendosiert in eine Vielzahl von Vorkammern und in einem zweiten Schritt mittels Einspritzzylindern und -kolben in die Formkavitäten eingebracht wird, wobei der durch den jeweiligen Einspritzkolben erzeugte Spritzdruck jeder Einspritzdüse unabhängig vom Förderdruck der Förderschnecke ist und die Zuführung des Materials in die betreffende Formkavität nach Öffnen der zugeordneten, in Ruhestellung geschlossenen Einspritzdüse erfolgt, dadurch **gekennzeichnet,** daß man in den Einspritzzylindern konische Düsenspitzen vorsieht, die jeweils durch eine konische Spitze eines zugeordneten Verschlußorgans verschließbar sind.

10. Verfahren nach Anspruch 9, dadurch **gekennzeichnet,** daß die in den Einspritzkolben verschieblich angeordneten Verschlußorgane der Einspritzdüsen einerseits sowie die Einspritzkolben andererseits jeweils gemeinsam betätigt werden.

11. Verfahren nach Anspruch 9 oder 10, dadurch **gekennzeichnet,** daß die Zuführung des Materials in die betreffende Formkavität erfolgt, nachdem die Verschlußorgane der zugeordneten, in Ruhestellung geschlossenen Einspritzdüse durch Bewegung eines zweiten Hubbalkens in Freigabestellung gelangt sind, worauf über einen ersten Hubbalken die gemeinsame Betätigung der Einspritzkolben bewirkt wird.

12. Verfahren nach einem der Ansprüche 9 bis 11, dadurch **gekennzeichnet,** daß man die Einspritzzylinder schlank ausbildet und mit hoher Dichte pro Flächeneinheit aneinanderreiht, wobei die Länge des Angußkanals zu jeder Vorkammer ohne Einfluß auf die Füllung der zugeordneten Formkavität frei wählbar ist.

## Claims

1. Device (1) for simultaneously manufacturing a plurality of injection-moulded micro-parts made from thermoplastic or cross-linking polymers in an injection moulding tool having a sprue block (2; 15) that comprises a mould block (4) with a plurality of mould cavities (5; 32) each of which is associated to an individual outlet duct of an injection nozzle (8; 17; 33), the material being charged, in a first volume metering step, by a conveyor worm (10) via temperable sprue channels (11; 26) into a plurality of antechambers (9; 25) and, in a second step, by means of injection cylinders (6; 16) and injection pistons (7; 18) into the mould cavities (5; 32), the injection pressure of each injection nozzle (8; 17; 33) generated by the respective injection piston (7; 18) being independent of the conveying pressure of the conveyor worm (10), the injection components that form the antechambers (9; 25), namely cylinders (6; 16), pistons (7; 18) and nozzles (8, 17; 33), being arranged in an axial array, and closing elements (27), each of which is axially displaceable in a respective longitudinal bore (29) of an injection piston (7; 18), being guided for closing the associated injection nozzles (8; 17; 33), **wherein** each of the injection cylinders (6; 16) terminates in a conical nozzle point (8; 17) adapted to be closed by a conical point (28) of an associated closing element (27).

2. Device according to claim 1, **wherein** each injection nozzle (33) comprises several outlet ducts (34) each of which opens towards a mould cavity (32).

3. Device according to claim 2, **wherein** several outlet ducts (34) of an injection nozzle (17) are adapted to be closed by a single closing element (27).

4. Device according to any one of claims 1 to 3, **wherein** during an injection operation, plane faces of the injection pistons (7; 18) move up to substantially plane ends of the injection cylinders (6; 16).

5. Device according to any one of claims 1 to 4, **wherein** the injection pistons (7; 18) are connected to operating pistons (14; 24') by a first lifting beam (19) preferably having blind hole bores (20) which are adapted to be closed by screws (22) and in which flanges (21) of the injection pistons (7; 18) are displaceably supported.

6. Device according to claim 5, **wherein** compensating springs (23) are arranged at faces (18') of the injection pistons (7; 18) opposite the antechambers (9; 25), in particular by way of stacks between screws (22) and flanges (21) of the injection pistons (7; 18).

7. Device according to claim 5 or claim 6, **wherein** the closing elements (27) extend through the longitudinal bores of the injection pistons (7; 18) up to a second lifting beam (30) to which they are secured.

8. Device according to any one of claims 1 to 7, **wherein** the injection pistons (6; 16) are slim-structured and are arrayed with a high density per surface unit, the length of the sprue channel (11; 26) up to each antechamber (9; 25) being freely selectable without influence on the filling of the associated mould cavity (5; 32).

9. Process for simultaneously manufacturing a plurality of injection-moulded micro-parts made from thermoplastic or cross-linking polymers in an injection moulding tool having a sprue block that comprises a mould block with a plurality of mould cavities each of which is associated to an individual outlet duct of an injection nozzle, the material being charged, in a first volume metering step, by a conveyor worm via temperable sprue channels into a plurality of antechambers and, in a second step, by means of injection cylinders and injection pistons into the mould cavities, the injection pressure of each injection nozzle generated by the respective injection piston being independent of the conveying pressure of the conveyor worm and the material being charged into the respective mould cavity when an associated injection nozzle that is closed in off-position has been opened, **wherein** within the injection cylinders, conical nozzle points are provided each of which is adapted to be closed by a conical point of an associated closing element.

10. Process according to claim 9, **wherein** joint operation is provided on the one hand of the injection nozzle closing elements displaceably arranged within the injection pistons and on the other hand of the injection pistons.

11. Process according to claim 9, **wherein** the material is charged into the respective mould cavity when the closing elements of the associated injection nozzle that is closed in off-position have reached a release position by movement of a second lifting beam, whereupon the joint operation of the injection pistons is effected through a first lifting beam.

12. Process according to any one of claims 9 to 11, **wherein** the injection pistons are slim-structured and are arrayed with a high density per surface unit, the length of the sprue channel up to each antechamber being freely selectable without influence on the filling of the associated mould cavity.

## Revendications

1. Dispositif (1) pour fabriquer simultanément une multitude de très petits articles moulés par injection en polymères thermoplastiques ou réticulés dans un outil de moulage par injection, avec un bloc d'injection (2; 15) disposant d'un bloc de moulage (4) avec une multitude de cavités de moulage (5; 32) auxquelles est associé un seul canal de sortie d'une buse d'injection (8; 17; 33), la matière pouvant être amenée à volume dosé pendant une première phase par une hélice transporteuse (10), en passant par des canaux de carotte (11; 26) permettant un équilibrage de la température, dans une multitude de préchambres (9; 25), puis pendant une seconde phase au moyen de cylindres (6; 16) et de pistons (7; 18) d'injection dans les cavités de moulage (5; 32), la pression d'injection de chaque buse (8; 17; 33), générée par les pistons d'injection respectifs (7; 18), étant indépendante de la pression de refoulement de l'hélice transporteuse (10), les éléments d'injection formant les préchambres (9, 25), c'est-à-dire les cylindres (6, 16), les pistons (7, 18) et les buses (8; 17, 33), étant disposés respectivement sur un axe, et des organes d'obturation (27) axialement mobiles étant guidés dans une perforation longitudinale respective (29) de chaque piston d'injection (7; 18) pour boucher les buses d'injection correspondantes (8; 17; 33), **caractérisé** en ce que les cylindres d'injection (6, 16) se terminent respectivement par un bout de buse conique (8, 17) pouvant être bouché avec la pointe conique (28) de l'organe d'obturation correspondant (27).

2. Dispositif selon la revendication 1, **caractérisé** en ce que les buses d'injection (33) disposent respectivement de plusieurs canaux de sortie (34) débouchant dans une cavité de moulage respective (32).

3. Dispositif selon la revendication 2, **caractérisé** en ce que plusieurs canaux de sortie (34) d'une buse d'injection (17) peuvent être bouchés par un organe d'obturation (27).

4. Dispositif selon l'une des revendications 1 à 3, **caractérisé** en ce que pendant l'opération d'injection, les pistons d'injection (7, 18) vont avec des surfaces frontales planes jusqu'aux extrémités globalement planes des cylindres d'injection (6, 16).

5. Dispositif selon l'une des revendications 1 à 4, **caractérisé** en ce que les pistons d'injection (7; 18) sont reliés à un piston d'actionnement (14; 24') par une première barre de levage (19) présentant de préférence des trous borgnes (20) qui peuvent être fermés par des vis (22) et dans lesquels les collerettes (21) des pistons d'injection (7; 18) sont logées de manière à pouvoir coulisser.

6. Dispositif selon la revendication 5, **caractérisé** en ce que des ressorts de compensation (23) sont disposés sur les surfaces frontales (18') des pistons d'injection (7; 18) opposées aux préchambres (9; 25), notamment par paquets entre les vis (22) et collerettes (21) des pistons d'injection (7; 18).

7. Dispositif selon la revendication 5 ou 6, **caractérisé** en ce que les organes d'obturation (27), en passant par les perforations longitudinales des pistons d'injection (7; 18), vont Jusqu'à une seconde barre de levage (30) et sont assemblés fermement à celle-ci.

8. Dispositif selon l'une des revendications 1 à 7, **caractérisé** en ce que les cylindres d'injection (6, 16) sont de forme mince et alignés avec une grande densité par unité de surface, la longueur du canal de carotte (11, 26) jusqu'à chaque préchambre (9; 25) pouvant être choisie librement sans influencer le remplissage de la cavité de moulage correspondante (5; 32).

9. Procédé pour fabriquer simultanément une multitude de très petits articles moulés par injection en polymères thermoplastiques ou réticulés dans un outil de moulage par injection, avec un bloc d'injection disposant d'un bloc de moulage avec une multitude de cavités de moulage auxquelles est associé un seul canal de sortie d'une buse d'injection, la matière pouvant être amenée à volume dosé pendant une première phase par une hélice transporteuse, en passant par des canaux de carotte permettant un équilibrage de la température, dans une multitude de préchambres, puis pendant une seconde phase au moyen de cylindres et de pistons d'injection dans les cavités de moulage, la pression d'injection de chaque buse d'injection, générée par les pistons d'injection respectifs, étant indépendante de la pression de refoulement de l'hélice transporteuse, et l'alimentation en matière de la cavité de moulage correspondante étant effectuée après l'ouverture de la buse d'injection correspondante, fermée en position de repos, **caractérisé** par le fait de prévoir dans les cylindres d'injection des bouts de buse coniques *pouvant* être bouchés respectivement avec la pointe conique d'un organe d'obturation correspondant.

10. Procédé selon la revendication 9, **caractérisé** en ce que d'une part les organes d'obturation des buses d'injection, disposés dans les pistons d'injection de manière à pouvoir coulisser, et d'autre part les pistons d'injection, sont respectivement actionnés en commun.

11. Procédé selon la revendication 9 ou 10, **caractérisé** en ce que la matière est amenée dans la cavité de moulage concernée après que les organes d'obturation de la buse d'injection correspondante, fermée en position de repos, soient parvenus en position de libération par le mouvement d'une seconde barre de levage, à la suite de quoi un actionnement commun des pistons d'injection est provoqué par une première barre de levage.

12. Procédé selon l'une des revendications 9 à 11, **caractérisé** en ce que les cylindres d'injection sont de forme mince et alignés avec une grande densité par unité de surface, la longueur du canal de carotte jusqu'à chaque préchambre pouvant être choisie librement sans influencer le remplissage de la cavité de moulage correspondante.
